# EUROPÄISCHE PATENTSCHRIFT

(11) **EP 2 481 615 B1**
(45) Veröffentlichungstag und Bekanntmachung des Hinweises auf die Patenterteilung: **21.03.2018**
(21) Anmeldenummer: 12151039.0
(22) Anmeldetag: 13.01.2012
(51) Int. Cl.: B60G 21/055, B60G 11/62, B60G 11/64, F16F 15/124, F16F 15/16

(54) **Stabilisatorkupplung**
Stabiliser coupling
Couplage de stabilisateur

(30) Priorität: 28.01.2011 DE 102011009738
(43) Veröffentlichungstag der Anmeldung: 01.08.2012
(73) Patentinhaber: Benteler Automobiltechnik GmbH, 33102 Paderborn (DE)
(72) Erfinder: Seibt, Oliver, 33102 Paderborn (DE); Krogmeier, Jürgen, 33161 Hövelhof (DE); Illg, Igor, 71272 Renningen (DE); Berheide, Friso, 33378 Rheda-Wiedenbrück (DE); Janzen, Andreas, 34439 Willebadessen-Peckelsheim (DE)
(74) Vertreter: Ksoll, Peter

(56) Entgegenhaltungen:
- DE-A1- 10 231 013
- DE-A1-102009 020 249
- US-A1- 2004 217 569

## Beschreibung

Die vorliegende Erfindung betrifft eine Stabilisatorkupplung zur Verwendung in einem Wankstabilisator für ein Kraftfahrzeug gemäß den Merkmalen im Oberbegriff von Patentanspruch 1.

Aus dem Stand der Technik sind zur Wankstabilisierung von Kraftfahrzeugen Stabilisatoren bekannt. Diese Stabilisatoren sind in der Regel als Torsionsbauteile ausgebildet. Es erfolgt auf der einen Seite eines Stabilisators eine Kopplung mit dem linksseitigen Rad des Kraftfahrzeuges und auf der anderen Seite mit dem rechtsseitigen Rad des Kraftfahrzeuges einer Kraftfahrzeugachse. Federt nun ein Rad ein bzw. aus, sorgt dieses für ein Verdrehen des Stabilisators.

Durch den Stabilisator wird das Wankverhalten eines Kraftfahrzeuges in unkritischen Bereichen gehalten. Je nach Auslegung eines solchen Stabilisators können verschiedene Fahreigenschaften hervorgerufen bzw. gefördert oder aber auch unterdrückt werden. Beispielsweise ist eine besonders harte Abstimmung für ein sportliches Fahrverhalten sinnvoll, da so das Wankverhalten weitestgehend minimiert wird und die Radlastverteilung bestmöglich für eine hohe Griffigkeit auf alle Räder abgestützt wird. Für ein geländegängiges Fahrzeug kann es unter Umständen hingegen sogar sinnvoll sein, zuweilen ganz auf einen Stabilisator zu verzichten, sodass die ein- bzw. ausfedernden Räder sich den unebenen Untergründen entsprechend anpassen können.

Um diese Diskrepanz des Einstellungsverhaltens verschiedener Stabilisatoreigenschaften in einem Stabilisator zu vereinen, sind aus dem Stand der Technik aktive Stabilisatoren bekannt. Bei diesen aktiven Stabilisatoren greift zumeist ein Stellaktuator elektrisch und/oder hydraulisch betrieben in das Torsionsverhalten des Stabilisators aktiv ein. So kann beispielsweise bei einem Sports Utility Vehicle ein weiches Stabilisatorverhalten in der Grundabstimmung vorhanden sein, sodass auch unebene Strecken mit hohem Bodenkontakt aller vier Räder gefahren werden können. Wird jedoch eine sportlichere Abstimmung gewählt, so sorgt der aktive Stellmotor für ein jeweils stärkeres Verdrehen des Stabilisators, was eine höhere Torsionssteifigkeit hervorruft und zu weniger Wankverhalten des Fahrzeuges bei sportlich dynamisch gefahrenen Kurven führt.

Nachteilig bei diesen aktiven Stabilisatorsystemen ist, dass diese besonders aufwändig zu produzieren sind und einen hohen technischen Aufwand zum Betreiben benötigen. Weiterhin haben solche Systeme durch entsprechende Auslegung der Aktuatoren sowie der Sensorik und auch Regelungs- und Steuerungstechnik ein hohes Eigengewicht. Gerade unter Langlebigkeitsaspekten ist es technisch nicht vermeidbar, dass ein System unter Umständen im Betrieb einen Defekt erhält.

Weiterhin sind aus dem Stand der Technik semiaktive Stabilisatoren bekannt, bei denen elastisch gekoppelte Stabilisatorhälften verschiedene Wankeigenschaften des Fahrzeugs, je nach Wahl des Fahrers, hervorrufen. Zumeist wird hier ein Elastomer oder aber ein Hydraulikfluid zur elastischen Koppelung verwendet. Aufgrund der hohen zu übertragenden Drehmomente durch einen solchen Stabilisator weisen diese Bauteile ein hohes Eigengewicht auf und sind kostenintensiv als Fräsbauteile herstellbar.

Einen solchen semiaktiven Stabilisator zeigt die DE 10 2009 020 249 A1. Die hier gezeigte Doppelkopplung ist derart konfiguriert, dass sie aus zwei Aktuatoren besteht, welche über einen Steuerblock miteinander verbunden sind. Jeder der beiden Aktuatoren weist jeweils ein zylindrisches Gehäuse auf, welche mittelbar über den Steuerblock verdrehfest miteinander verbunden sind. Hierdurch soll es der semiaktiven Anordnung zur Fahrwerkstabilisierung ermöglicht werden, auch mittig bei einem Stabilisator zum Einsatz zu kommen und dadurch einen größeren Verdrehwinkel zu ermöglichen. Dies wird durch das im Steuerblock angeordnete Ventil ermöglicht, welches die Ausgleichsleitungen der beiden Aktuatoren miteinander verbindet und so einen Ausgleich eines flüssigen Kompressionsfluids zwischen den beiden Aktuatoren herstellen kann.

Aufgabe der vorliegenden Erfindung ist es daher, einen semiaktiven Stabilisator zur Verfügung zu stellen, der eine dynamische Wankregelung realisiert und gleichzeitig gegenüber dem Stand der Technik bekannten Stabilisatoranordnungen kostengünstig produzierbar ist, ein geringes Eigengewicht aufweist und besonders langlebig ist.

Die zuvor genannte Aufgabe wird mit einer Stabilisatorkupplung zur Verwendung in einem Wankstabilisator für ein Kraftfahrzeug gemäß den Merkmalen im Patenanspruch 1 gelöst.

Vorteilhafte Ausführungsvarianten der vorliegenden Erfindung sind Bestandteil der abhängigen Patentansprüche.

Die erfindungsgemäße Doppelstabilisatorkupplung zur Verwendung in einem Wankstabilisator für ein Kraftfahrzeug, wobei zwei Stabilisatorkupplungen jeweils mindestens einen Aktuator aufweisen und der Aktuator durch ein Außenprofilelement und ein Innenprofilelement ausgebildet ist, wobei zwischen dem Außenprofilelement und dem Innenprofilelement ein elastisch verformbarer Körper angeordnet ist, ist erfindungsgemäß dadurch gekennzeichnet, dass die zwei Stabilisatorkupplungen über ein Hülsenbauteil aus Leichtmetall miteinander gekoppelt sind und das Außenprofilelement als Hohlprofilbauteil ausgebildet ist und dass das Außenprofilelement und das Innenprofilelement aus einer Leichtmetalllegierung als Strangpressprofil ausgebildet sind.

Unter einem Außenprofilelement ist ein Profilelement zu verstehen, das an der Stabilisatorkupplung weiter außen oder sogar an einer Außenseite der Stabilisatorkupplung angeordnet ist, wohingegen ein Innenprofilelement an einer Innenseite bzw. im Inneren der Stabilisatorkupplung angeordnet ist. Unter einem Hohlprofilbauteil ist im Rahmen der Erfindung ein hohles Profilbauteil zu verstehen, das bevorzugt von einem Profilstab abgelängt wurde. Das Hohlprofilbauteil ist also im Inneren hohl und weist im Querschnitt ein Profil auf. Insbesondere ist das Profil zur Ausbildung eines Formschlusses mit einem anderen Profil geeignet, ganz besonders bevorzugt unter Eingliederung eines elastischen Zwischenkörpers und/oder Fluides.

Hierbei besteht das Profilbauteil im Rahmen der Erfindung aus einem Leichtmetall, wie beispielsweise Aluminium. Das Profilbauteil selbst ist stranggepresst. Hierdurch wird eine besonders kostengünstige Stabilisatorkupplung zur Verfügung gestellt, die aufgrund von der Verwendung von Profilbauteilen als Meterware eine modulare Bauweise aufweist. Gleichfalls kann dadurch ein Baukastenprinzip realisiert werden, so dass beispielsweise durch die Ablängung verschiedener Innen- und Außenprofilelemente sowie dazwischen angeordneten, elastisch verformbaren Körpern eine verschieden starke Torsionsrate gewählt werden kann.

Durch die Ausbildung der Außenprofilelemente und/oder der Innenprofilelemente als Strangpressprofil haben die einzelnen Komponenten gegenüber dem Stand der Technik artverwandter Bauprinzipien ein besonders geringes Eigengewicht. Weiterhin sind die einzelnen Komponenten gegenüber Fräsbauteilen besonders kostengünstig zu produzieren. Es kann hierbei auf mit einem Endlosverfahren herstellbare Strangpressprofile abgestellt werden, die wiederum die Produktionskosten erheblich senken, so dass durch die erfindungsgemäße Stabilisatorkupplung semiaktive Wankstabilisatoren auch in Fahrzeugklassen der Klein- und Kleinstwagen eingesetzt werden können. Auch ist eine Ausbildung einzelner Profilelemente als Kunststoffstrangpressprofil im Rahmen der Erfindung möglich.

Weiterhin ist die Stabilisatorkupplung als Doppelstabilisatorkupplung ausgebildet, wobei die zwei Stabilisatorkupplungen über ein Hülsenbauteil miteinander gekoppelt sind, wobei das Hülsenbauteil aus Leichtmetall ausgebildet ist.

Im Rahmen der Erfindung kann das Hülsenbauteil wiederum ebenfalls als Strangpressprofil oder aber als sonstig hergestelltes Profilbauteil ausgebildet sein. Hier ergeben sich analoge Vorteile in Bezug auf die günstige Produzierbarkeit sowie gewichtsoptimierte Auslegung, wie bereits bei dem Außenprofilelement und dem Innenprofilelement erwähnt. Im Rahmen der Erfindung können auch Kunststoffe oder aber Faserverbundwerkstoffe eingesetzt werden, um das Hülsenbauteil zu bilden.

Insbesondere ist die erfindungsgemäße Stabilisatorkupplung mit einer lösbaren Schraubverbindung gekoppelt. Hierdurch sinkt der Produktions- und Erstmontageaufwand. Das System ist weiterhin leicht wartungsfähig und im Schadensfall auch leicht instand zu setzen. Weiterhin ergibt sich durch die Schraubverbindung und durch die modulare Bauweise als Baukastenprinzip eine hohe Adaptierbarkeit auf verschiedene Fahrzeugtypen.

Der in der Stabilisatorkupplung angeordnete elastische Körper ist bevorzugt mit Druck beaufschlagbar, insbesondere über ein Fluid. Hierbei handelt es sich im Rahmen der Erfindung besonders bevorzugt um einen mit Innendruck beaufschlagbaren elastisch verformbaren Hohlkörper, der mittelbar oder unmittelbar Drehmomente übertragend eine Kopplung zwischen Außenprofilelement und Innenprofilelement herstellt. Durch die verschiedenen elastischen Körper, insbesondere bei Einsatz in einer Doppelstabilisatorkupplung, ermöglicht der Aufbau nicht nur die Anordnung der Stabilisatorkupplung in der Mitte eines Stabilisators respektive einer Kraftfahrzeugachse, sondern auch eine asymmetrische Anordnung und somit den Ausgleich von unterschiedlich starken Radhubkräften.

Insbesondere bei der Stabilisatordoppelkupplung erfolgt die Funktionsweise über eine Verdrehung einer Stabilisatorhälfte, wobei sich die Drehkraft über den verformbaren Körper auf das Hülsenbauteil überträgt und wiederum über den zweiten verformbaren Körper auf die andere Stabilisatorhälfte überträgt. Hierbei kann durch die Kopplung der beiden Aktuatoren gesteuert und/oder geregelt werden, in welchem Umfang das Drehmoment übertragen, gedämpft oder beeinflusst werden soll.

Besonders bevorzugt ist weiterhin in dem Hülsenbauteil ein Mittelstück angeordnet. Das Mittelstück ist dazu ausgelegt, insbesondere die zwei Stabilisatorkupplungen örtlich und/oder fluiddicht voneinander zu separieren. Das Mittelstück ist daher auch als Verbindungsblock auslegbar. Besonders bevorzugt wird dieser in das Hülsenbauteil eingeschoben und trennt somit örtlich die zwei Aktuatoren voneinander. Bevorzugt werden diese zusätzlich fluiddicht voneinander getrennt.

Zur aktiven Regelung und/oder Steuerung können die zwei Stabilisatorkupplungen einer Doppelstabilisatorkupplung über einen Druckkanal miteinander gekoppelt sein. Insbesondere sind hierbei die in den elastischen Körpern vorhandenen Fluide über den Druckkanal miteinander in Kontakt stehend. Je nach Auslegung des Druckkanals erfolgt somit ein Druckausgleich der zwei voneinander separierten, benachbarten elastischen Körper.

Die Funktionsweise erfolgt dabei über eine das Innenvolumen verändernde Verformung des Hohlkörpers über ein drehrichtungsabhängiges Verdrehen des Innenprofilelementes gegenüber dem Außenprofilelement respektive dem Hülsenbauteil. Bei Verdrehen des Innenprofilelements gegenüber dem Hülsenbauteil werden unterschiedliche Drücke auf die jeweilige Seite zwischen dem miteinander verzahnten Außenprofilelement und Innenprofilelement gegeben. Das in den elastisch verformbaren Körpern vorhandene Fluid wird somit örtlich verschoben und zu einer Strömung bzw. Druckausgleich gezwungen. Das Strömungsverhalten kann beispielsweise auch aktiv über ein Stellventil geregelt werden. Der Strömungsfluss kann somit die Dämpfungsrate und/oder die Intensität der Drehmomentübertragung regeln.

Das Stellventil selber kann bevorzugt mit dem Druckkanal in Verbindung stehen oder aber besonders bevorzugt in dem Mittelstück selbst angeordnet sein. Über das Stellventil ist das Wankverhalten des Kraftfahrzeuges über die erfindungsgemäße Stabilisatorkupplung aktiv regelbar und/oder steuerbar.

In einer weiteren bevorzugten Ausführungsvariante der vorliegenden Erfindung sind das Außenprofilelement und das Innenprofilelement mit dem Mittelstück und/oder dem Hülsenbauteil formschlüssig und/oder stoffschlüssig gekoppelt. Hierdurch wird ein hoher fertigungstechnischer Vorteil erreicht, da die einzelnen Bauteile besonders einfach produzierbar sind und bei der Erstmontage oder bei Instandsetzungs- und Wartungsarbeiten besonders einfach miteinander zusammensetzbar sind.

Im Rahmen der Erfindung können hierzu Schraubverbindungen oder aber auch Klebeverbindungen eingesetzt werden. Weiterhin ist eine Nietverbindung zwischen den einzelnen Komponenten vorstellbar. Darüber hinaus können auch Presssitzverbindungen oder aber Bördelverbindungen bei den einzelnen Hohlprofilbauteilen eingesetzt werden.

Ebenfalls ist besonders bevorzugt das Außenprofilelement mit dem Mittelstück über eine Schraubverbindung gekoppelt. Hierbei wird auf der dem Mittelstück gegenüberliegenden Seite des Außenprofilelements ein Dichtdeckel angeordnet. Im Rahmen der Erfindung ist somit eine besonders kostengünstige und einfache Erstmontage realisierbar, bei gleichzeitig hoher Druckdichtigkeit und somit Langlebigkeit des Systems.

Weiterhin besonders bevorzugt ist der Dichtdeckel von dem Innenprofilelement zumindest abschnittsweise durchgriffen, wobei ein Flansch zur Koppelung mit einem Stabilisatorabschnitt mit dem Innenprofilelement koppelbar ist. Hierdurch ist es möglich, bei späteren Wartungs- oder Instandsetzungsarbeiten die Stabilisatorkupplung besonders einfach aus dem im Kraftfahrzeug eingebauten Stabilisator zu demontieren. Weiterhin werden hierdurch eine besonders einfache Erstmontage und ein besonders konstruktionstechnisch einfacher Aufbau erreicht, bei gleichzeitiger hoher Dichtigkeit des Gesamtsystems, auch bei langjähriger Drehmomentübertragung.

Die einzeln sich ergebenden vorteilhaften Ausführungsvarianten aus der vorangegangenen Beschreibung und aus der nachfolgenden Erläuterung sind beliebig miteinander kombinierbar, ohne den Rahmen der Erfindung zu verlassen.

Weitere Vorteile, Merkmale, Aspekte und Eigenschaften der vorliegenden Erfindung sind Bestandteil der nachfolgenden Beschreibung. Bevorzugte Ausführungsvarianten sind in den schematischen Figuren dargestellt, die dem einfachen Verständnis der Erfindung dienen.

Es zeigen:
- Figur 1: eine perspektivische Darstellung einer erfindungsgemäßen Stabilisatorkupplung;
- Figur 2: eine Stirnansicht auf die Stabilisatorkupplung und
- Figur 3: einen Längsschnitt durch die Stabilisatorkupplung gemäß der Linie A-A in der Figur 2.

In den Figuren werden für gleiche oder ähnliche Bauteile dieselben Bezugszeichen verwendet, auch wenn eine wiederholte Beschreibung aus Vereinfachungsgründen entfällt.

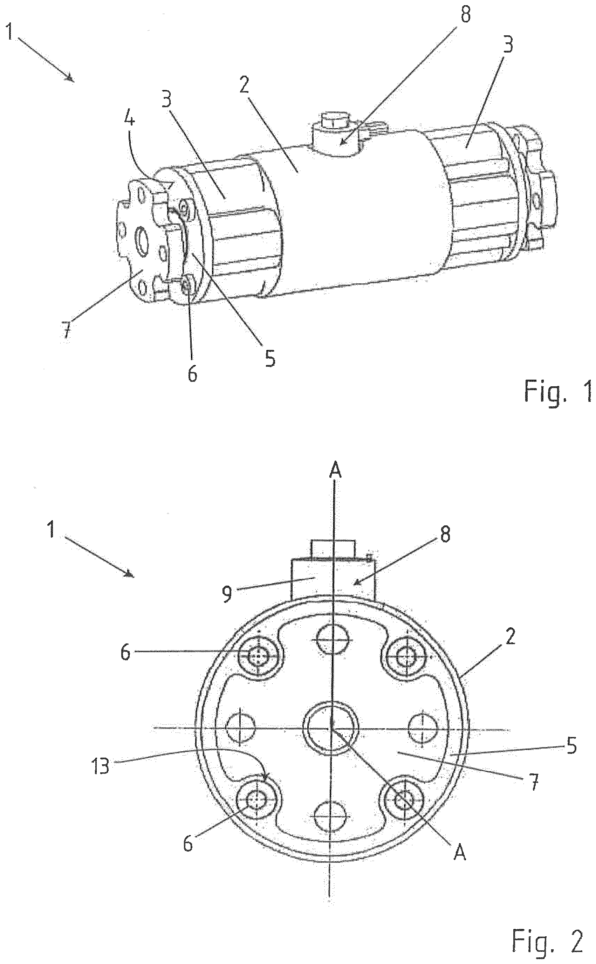

Figur 1 zeigt eine perspektivische Ansicht einer Stabilisatorkupplung 1. Die Stabilisatorkupplung 1 weist ein Hülsenbauteil 2 auf, von welchem aus sich zwei Außenprofilelemente 3 erstrecken. Die Außenprofilelemente 3 sind jeweils stirnseitig 4 über einen Dichtdeckel 5 mit dem Hülsenbauteil 2 verschraubt. Weiterhin ist jeweils endseitig angeordnet ein Flansch 7. Weiterhin ist zu erkennen, dass ein Stellventil 8 zentral in dem Hülsenbauteil 2 angeordnet ist.

Figur 2 zeigt eine Stirnansicht der erfindungsgemäßen Stabilisatorkupplung 1. Hier ist zu erkennen, dass der Dichtdeckel 5 mittels vier Schraubverbindungen 6 an dem Hülsenbauteil 2 gekoppelt ist. Das Stellventil 8 weist einen Sockel 9 auf. Weiterhin ist vor dem Dichtdeckel 5 der Flansch 7 angeordnet.

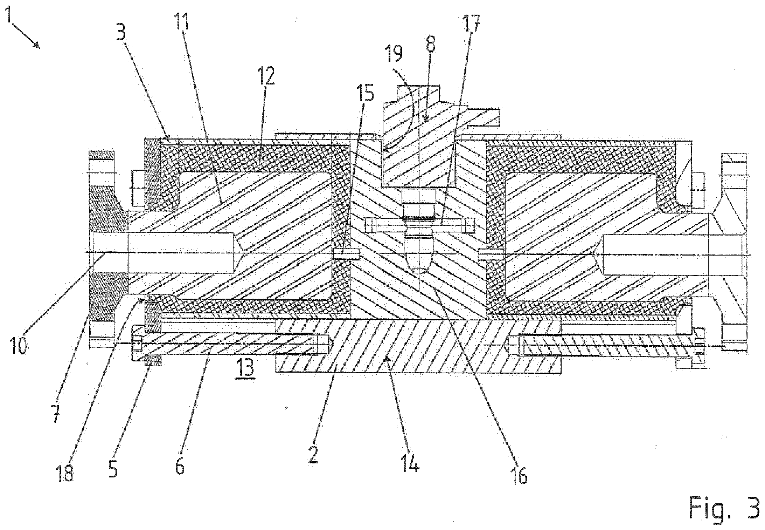

Figur 3 zeigt eine Schnittdarstellung der Stabilisatorkupplung entlang der Linie A-A gemäß Figur 2. Hierbei ist von auf die Bildebene bezogen links nach rechts bis zur Mitte folgender Aufbau zu erkennen: Ein Flansch 7 zur Anbindung eines hier nicht näher dargestellten Stabilisators, welcher mit einem Innenprofilelement 11 gekoppelt ist. Das Innenprofilelement 11 ist wiederum über einen elastisch verformbaren Körper 12 mit dem Außenprofilelement 3 gekoppelt. Das Innenprofilelement 11 durchgreift dabei den Dichtdeckel 5, welcher weiter oben durch die Schraubverbindungen 6 zur Kopplung mit dem Hülsenbauteil 2 durchgriffen ist. Im Bereich der Schraubverbindung 6 ist eine Ausnehmung 13 an dem Außenprofilelement 3 vorhanden, welche in Figur 2 dargestellt ein Verzahnungsprofil bildet.

Das Hülsenbauteil 2 selber weist im Bereich der Schraubverbindung 6 eine Verdickung 14 auf, welche im Zusammenspiel mit der Ausnehmung 13 des Außenprofilelements 3 einen formschlüssigen Verzahnungseingriff von Außenprofilelement 3 und Hülsenbauteil 2 ermöglicht. Mittig angeordnet ist in jedem Außenprofilelement 3 eine Kanalanschlussöffnung 15. Ein in dem elastisch verformbaren Körper 12 vorhandenes, hier nicht näher dargestelltes Fluid ist über die Kanalanschlussöffnung 15 und einen Druckkanal 17 mit der zweiten Stabilisatorkupplung auf der rechten Seite verbunden. Diese Koppelung verläuft an dem hier gezeigten Ausführungsbeispiel orthogonal zur Bildebene, weshalb eine unmittelbare Verbindung nicht dargestellt ist.

Weiterhin ist ein Mittelstück 16 eingesetzt, welches in dem Hülsenbauteil 2 die zwei Stabilisatorkupplungen örtlich trennt. In dem Mittelstück 16 selber befindet sich der Druckkanal 17, der die zwei elastisch verformbaren Körper 12 miteinander verbindet. Ebenso ist in dem Mittelstück 16 das Stellventil 8 angeordnet, welches gleichzeitig in den Druckkanal 17 eingreift. Hierdurch ergibt sich eine Regelungs- und Steuerungsmöglichkeit für den Druckausgleich. Das Stellventil 8 ist in einer Bohrung 19 angeordnet, die in dem Mittelstück 16 und auch dem Hülsenbauteil 2 ausgebildet ist. Das Stellventil 8 kann dabei in der Bohrung 19 eingeschraubt sein oder aber auch eingepresst oder eingeklebt sein.

An den äußeren Enden der Außenprofilelemente ist weiterhin eine Dichtung 18 angeordnet, die den elastisch verformbaren Körper nach außen hin abdichtet und ein Eindringen von Verschmutzungen verhindert.

Wird der Flansch 7 mit einem Drehmoment beaufschlagt, verdreht sich das Innenprofilelement 11 relativ zu dem Außenprofilelement 3. Der Ausgleich für die Relativbewegung erfolgt über den zwischen den in radialer Richtung verzahnten Profilelementen 3,11 angeordneten elastisch verformbaren Körper 12. Das hierin befindlich, nicht näher dargestellte Fluid wird folglich durch die Verzahnung mit Druck beaufschlagt, der sich durch die Kanalanschlussöffnung 15 und den Druckkanal 17 mit dem zweiten elastisch verformbaren Körper ausgleicht. Über die geometrische Auslegung des Druckkanals 17 oder aber das Stellventil 8 kann eine Regelung und/oder Steuerung der Torsionssteifigkeit oder aber Torsionsdämpfung erfolgen.

Vorzugsweise sind weiterhin verschiedene, hier nicht näher dargestellte Dichtelemente, Simmeringe und Dichtungsscheiben in dem Mittelstück 16 und/oder zwischen Mittelstück 16 und elastisch verformbaren Körper 12 angeordnet. Diese stellen dann die fluidische Verbindung zwischen linkem und rechtem elastisch verformbaren Körper 12 her.

### Bezugszeichen:

1 - Stabilisatorkupplung
2 - Hülsenbauteil
3 - Außenprofilelement
4 - stirnseitig zu 3
5 - Dichtdeckel
6 - Schraubverbindung
7 - Flansch
8 - Stellventil
9 - Sockel
10 - Flanschschraube
11 - Innenprofilelement
12 - elastisch verformbarer Körper
13 - Ausnehmung
14 - Verdickung
15 - Kanalanschlussöffnung
16 - Mittelstück
17 - Druckkanal
18 - Dichtung
19 - Bohrung

## Patentansprüche

1. Doppelstabilisatorkupplung zur Verwendung in einem Wankstabilisator für ein Kraftfahrzeug, wobei zwei Stabilisatorkupplungen (1) jeweils mindestens einen Aktuator aufweisen und der Aktuator durch ein Außenprofilelement (3) und ein Innenprofilelement (11) ausgebildet ist, wobei zwischen dem Außenprofilelement (3) und dem Innenprofilelement (11) ein elastisch verformbarer Körper (12) angeordnet ist, **dadurch gekennzeichnet, dass** die zwei Stabilisatorkupplungen (1) über ein Hülsenbauteil (2) aus Leichtmetall miteinander gekoppelt sind und das Außenprofilelement (3) als Hohlprofilbauteil ausgebildet ist und dass das Außenprofilelement (3) und das Innenprofilelement (11) aus einer Leichtmetalllegierung als Strangpressprofil ausgebildet sind.

2. Stabilisatorkupplung nach Anspruch 1, **dadurch gekennzeichnet, dass** der elastisch verformbare Körper (12) mit Druck beaufschlagbar ist, vorzugsweise mit einem Fluid.

3. Stabilisatorkupplung nach einem der Ansprüche 1 oder 2, **dadurch gekennzeichnet, dass** in dem Hülsenbauteil (2) ein Mittelstück (16) angeordnet ist, wobei das Mittelstück (16) insbesondere die zwei Stabilisatorkupplungen (1) fluiddicht voneinander separiert.

4. Stabilisatorkupplung nach einem der Ansprüche 1 bis 3, **dadurch gekennzeichnet, dass** die zwei Stabilisatorkupplungen (1) über einen Druckkanal (17) miteinander gekoppelt sind.

5. Stabilisatorkupplung nach Anspruch 4, **dadurch gekennzeichnet, dass** mit dem Druckkanal (17) ein Stellventil (8) in Verbindung steht, vorzugsweise ist das Stellventil (8) in dem Mittelstück (16) angeordnet, besonders bevorzugt ist das Stellventil (8) aktiv regelbar und/oder steuerbar.

6. Stabilisatorkupplung nach einem der Ansprüche 1 bis 5, **dadurch gekennzeichnet, dass** das Außenprofilelement (3) oder das Innenprofilelement (11) mit dem Mittelstück (16) und/oder dem Hülsenbauteil (2) formschlüssig und/oder stoffschlüssig gekoppelt ist.

7. Stabilisatorkupplung nach Anspruch 6, **dadurch gekennzeichnet, dass** das Außenprofilelement (3) mit dem Mittelstück (16) über eine Schraubverbindung (6) gekoppelt ist, wobei auf der dem Mittelstück (16) gegenüberliegenden Seite des Außenprofilelementes (3) ein Dichtdeckel (5) angeordnet ist.

8. Stabilisatorkupplung nach Anspruch 7, **dadurch gekennzeichnet, dass** der Dichtdeckel (5) von dem Innenprofilelement (11) zumindest abschnittsweise durchgriffen ist, wobei ein Flansch (7) zur Koppelung mit einem Stabilisatorabschnitt mit dem Innenprofilelement (11) koppelbar ist.

## Claims

1. Double stabiliser coupling for use in a roll stabiliser for a motor vehicle, wherein two stabiliser couplings (1) each have at least one actuator, and the actuator is formed by an outer profile element (3) and an inner profile element (11), wherein an elastically deformable body (12) is arranged between the outer profile element (3) and the inner profile element (11), **characterised in that** the two stabiliser couplings (1) are coupled with one another by means of a sleeve component (2) made of a light metal and the outer profile element (3) is constructed as a hollow profile component and that the outer profile element (3) and the inner profile element (11) are constructed as an extruded profile from a light metal alloy.

2. Stabiliser coupling according to claim 1, **characterised in that** pressure can be applied to the elastically deformable body (12), preferably with a fluid.

3. Stabiliser coupling according to either claim 1 or 2, **characterised in that** a centrepiece (16) is arranged in the sleeve component (2), wherein the centrepiece (16) separates the two stabiliser couplings (1) from each other in a fluid-tight manner.

4. Stabiliser coupling according to any one of claims 1 to 3, **characterised in that** the two stabiliser couplings (1) are coupled with each other via a pressure channel (17).

5. Stabiliser coupling according to claim 4, **characterised in that** a control valve (8) is connected to the pressure channel (17), preferably the control valve (8) is arranged in the centrepiece (16), particularly preferred, the control valve (8) can be actively adjusted and/or controlled.

6. Stabiliser coupling according to any one of claims 1 to 5, **characterised in that** the outer profile element (3) or the inner profile element (11) is coupled with the centrepiece (16) and/or the sleeve component (2) in a form-fit manner and/or by material engagement.

7. Stabiliser coupling according to claim 6, **characterised in that** the outer profile element (3) is coupled with the centrepiece (16) via a screw connection (6), wherein a sealing cover (5) is arranged on the side of the outer profile element (3) opposite the centrepiece (16).

8. Stabiliser coupling according to claim 7, **characterised in that** inner profile element (11) extends at least partially through the sealing cover (5), wherein a flange (7) can be coupled with the inner profile element (11) for attachment to a stabiliser section.

## Revendications

1. Couplage de stabilisateur double pour utilisation dans un stabilisateur de roulis pour un véhicule automobile, dans lequel deux couplages de stabilisateur (1) présentent respectivement au moins un actionneur et l'actionneur est formé par un élément profilé externe (3) et un élément profilé interne (11), dans lequel est agencé entre l'élément profilé externe (3) et l'élément profilé interne (11) un corps à déformation élastique (12), **caractérisé en ce que** les deux couplages de stabilisateur (1) sont couplés l'un avec l'autre via un composant tubulaire (2) constitué d'un métal léger et l'élément profilé externe (3) se présente sous la forme d'une pièce profilée creuse et l'élément profilé externe (3) et l'élément profilé interne (11) constitués d'un alliage de métal léger se présentent sous la forme d'un profilé extrudé.

2. Couplage de stabilisateur selon la revendication 1, **caractérisé en ce que** le corps à déformation élastique (12) peut être soumis à une pression, de préférence avec un fluide.

3. Couplage de stabilisateur selon l'une quelconque des revendications 1 ou 2, **caractérisé en ce qu'**une pièce centrale (16) est agencée dans le composant tubulaire (2), dans lequel la pièce centrale (16) sépare en particulier les deux couplages de stabilisateur (1) de manière étanche aux fluides.

4. Couplage de stabilisateur selon l'une quelconque des revendications 1 à 3, **caractérisé en ce que** les deux couplages de stabilisateur (1) sont couplés l'un à l'autre via un canal de pression (17).

5. Couplage de stabilisateur selon la revendication 4, **caractérisé en ce qu'**une soupape de réglage (8) est en communication avec le canal de pression (17), de préférence la soupape de réglage (8) est agencée dans la pièce centrale (16), mieux encore la soupape de réglage (8) peut être réglée et/ou commandée de manière active.

6. Couplage de stabilisateur selon l'une quelconque des revendications 1 à 5, **caractérisé en ce que** l'élément profilé externe (3) ou l'élément profilé interne (11) est couplé à la pièce centrale (16) et/ou au composant tubulaire (2) par adaptation de formes et/ou de d'un seul tenant.

7. Couplage de stabilisateur selon la revendication 6, **caractérisé en ce que** l'élément profilé externe (3) est couplé à la pièce centrale (16) via une liaison à vis (6), dans lequel un couvercle d'étanchéité (5) est agencé sur le côté de l'élément profilé externe (3) opposé à la pièce centrale (16).

8. Couplage de stabilisateur selon la revendication 7, **caractérisé en ce que** le couvercle d'étanchéité (5) est traversé par l'élément profilé interne (11) au moins par sections, dans lequel une bride (7) pour le couplage à une section de stabilisateur peut être couplée à l'élément profilé interne (11).
